# EUROPÄISCHE PATENTSCHRIFT

(11) **EP 4 046 828 B1**
(45) Veröffentlichungstag und Bekanntmachung des Hinweises auf die Patenterteilung: **18.12.2024**
(21) Anmeldenummer: 22162605.4
(22) Anmeldetag: 10.02.2012
(51) Int. Cl.: B60C 11/24, F16D 66/02, H01R 39/58

(54) **VERSCHLEISSERKENNUNGSSYSTEM UND VERFAHREN**
WEAR DETECTION SYSTEM AND METHOD
SYSTÈME ET PROCÉDÉ DE DÉTECTION D'USURE

(30) Priorität: 09.03.2011 DE 102011005302
(43) Veröffentlichungstag der Anmeldung: 24.08.2022
(62) Teilanmeldung aus: 12709810.1
(73) Patentinhaber: Schunk Transit Systems GmbH, 35435 Wettenberg (DE)
(72) Erfinder: SPIES, Jürgen, 35428 Langgöns (DE); PFEFFER, Daniel, 35325 Mücke (DE); NETTESHEIM, Dr. Stefan, 12205 Berlin (DE); JAKUBITH, Dr. Sven, 12203 Berlin (DE); FLEISCHHAUER, Guntram, 35102 Lohra (DE); STAUBACH, Timo, 36358 Herbstein (DE)
(74) Vertreter: advotec.

(56) Entgegenhaltungen:
- DE-A1- 102007 009 423
- DE-A1- 19 840 081
- DE-A1- 3 247 330
- GB-A- 2 092 390

## Beschreibung

Die Erfindung betrifft ein Verschleißerkennungssystem sowie ein Verfahren zur Verschleißerkennung, insbesondere für Reibelemente, wie Bürsten, Reibbelege, Bremsbelege, Schmierstücke oder dergleichen, mit zumindest einem konsumierbaren Reibelement, und einer Transpondereinheit, wobei die Transpondereinheit mit einer Sende-Empfangseinheit drahtlos kommunizieren kann.

Reibelemente, wie beispielsweise Kohlebürsten für Elektromotore, Reibbelege zur Kraftübertragung, Bremsbelege und Festschmierstoffstücke, sind grundsätzlich immer einem Verschleiß durch Abrieb von Material des Reibelements unterworfen. Häufig ist es wünschenswert, das Reibelement bereits vor einem Erreichen einer eine Funktion beeinträchtigten Verschleißgrenze auszutauschen. So werden Verschleißerkennungssysteme regelmäßig dazu eingesetzt, einen Verschleißzustand von Reibelementen zu überwachen. Bekannt sind hier elektrische Kontakte an Reibelementen, oder auch Schalter, die ein Erreichen einer Verschleißgrenze signalisieren können. Derartige Verschleißerkennungssysteme erfordern jedoch eine Verkabelung der Kontakte bzw. Schalter mit einer Steuereinheit. Eine derartige Verkabelung ist nur relativ kostenaufwendig herzustellen, insbesondere wenn eine Vielzahl Reibelemente gleichzeitig überwacht werden sollen. So kann eine Verkabelung, für beispielsweise Bürsten eines Generators, auch zur Reduzierung des Verkabelungsaufwands in Art einer Reihenschaltung ausgebildet sein. Welche Bürste das betreffende Signal ausgelöst hat, ist dann jedoch nicht mehr vom Verschleißerkennungssystem erkennbar.

Weiter ist es bekannt, Reibelemente mit einer Transpondereinheit zu versehen, die mit einer Sende-Empfangseinheit drahtlos kommunizieren kann, wodurch eine aufwendige Verkabelung der Reibelemente entfällt. Die DE 10 2007 009 423 A1 offenbart ein derartiges Verschleißerkennungssystem, bei dem eine Kohlebürste mit einer Transpondereinheit versehen ist. Bei Erreichen einer Verschleißgrenze der Kohlebürste wird die Transpondereinheit durch Kontakt mit einer Reibfläche, an die die Kohlebürste anliegt, zerstört. Die Kohlebürste kann dann nicht mehr von einer Sende-Empfangseinheit detektiert werden, worauf diese die Kohlebürste als verschlissen erkennt. Auch kann vorgesehen sein, dass die Transpondereinheit Messwertaufnehmer zur Bestimmung einer Temperatur der Kohlebürste aufweist, wobei diese Daten von der Transpondereinheit an die Sende-Empfangseinheit übermittelt werden.

Das bekannte Verschleißerkennungssystem weist den Nachteil auf, dass eine Zerstörung der Transpondereinheit bei Erreichen der Verschleißgrenze zwingend erforderlich ist. Die Transpondereinheit muss daher so ausgebildet sein bzw. so an der Kohlebürste befestigt sein, dass sie bei Erreichen der Verschleißgrenze bzw. der Reibfläche sicher zerstört wird. Kostengünstige Transpondereinheiten, wie Sie beispielsweise in Etikettenform erhältlich sind, können daher hier keine Verwendung finden, da sich die Etiketten durch Wärmeeinwirkung in unmittelbarer Nähe der Reibfläche ablösen können oder aufgrund einer mangelhaften Haftung an der Kohlebürste nicht mechanisch zerstört werden können.

Auch können nur weitergehende Informationen über einen Verschleißzustand eines Reibelements vor Erreichen einer Verschleißgrenze ermittelt werden, wenn eine Transpondereinheit ergänzend mit Messwertaufnehmern ausgestattet ist. So kann die Transpondereinheit an einer beliebigen, für eine Montage gut geeignete Position an einem Reibelement befestigt sein, wobei die Transpondereinheit beispielsweise über Kabel mit einem Messwertaufnehmer oder einem einfachen im Bereich einer Verschleißgrenze des Reibelements angebrachten Kontakts verbunden ist. So sind Transpondereinheiten, die einer Zerstörung bedürfen, nur aufwendig zu befestigen, und solche, die mit Messwertaufnehmern und Verbindungskabeln ausgestattet sind vergleichsweise teuer.

Andere Verschleißerkennungssysteme sind aus DE19840081 A1 und DE3247330 A1 bekannt.

Der vorliegenden Erfindung liegt daher die Aufgabe zugrunde, ein Verschleißerkennungssystem und ein Verfahren zur Verschleißerkennung vorzuschlagen, welches eine kostengünstige und einfache Verschleißüberwachung von Reibelementen ermöglicht.

Diese Aufgabe wird durch ein Verschleißerkennungssystem mit den Merkmalen des Anspruchs 1 und ein Verfahren zur Verschleißerkennung mit den Merkmalen des Anspruchs 6 gelöst.

Das erfindungsgemäße Verschleißerkennungssystem, insbesondere für Reibelemente, wie Bürsten, Reibbelege, Bremsbelege, Schmierstücke oder dergleichen, umfasst zumindest ein konsumierbares Reibelement und eine Transpondereinheit, wobei die Transpondereinheit mit einer Sende-Empfangseinheit drahtlos kommunizieren kann, wobei das Verschleißerkennungssystem eine Abschirmeinrichtung aufweist, wobei die Abschirmeinrichtung so ausgebildet ist, dass mittels der Abschirmeinrichtung die Transpondereinheit in Abhängigkeit eines Verschleißzustandes des Reibelements zumindest teilweise abschirmbar ist, derart, dass eine Kommunikation zwischen der Transpondereinheit und der Sende-Empfangseinheit beeinflussbar ist, wobei das Verschleißerkennungssystem eine Haltevorrichtung umfasst, die zur bewegbaren Positionierung des Reibelements relativ zu einer Reibfläche dient, wobei die Transpondereinheit ortsfest mit der Haltevorrichtung verbunden ist, wobei die Abschirmeinrichtung als ein an der Haltevorrichtung angeordnetes Abschirmelement ausgebildet ist, welches die Transpondereinheit abschirmend abdecken oder freigeben kann, wenn eine Bewegung des Reibelements relativ zu der Haltevorrichtung erfolgt.

Durch die Beeinflussung der Transpondereinheit durch eine davon unabhängig ausgebildete Abschirmeinrichtung, ist es möglich, eine Kommunikationsverbindung zwischen der Transpondereinheit und der Sende-Empfangseinheit zu verändern, zu unterbinden oder überhaupt erst zu ermöglichen. Da das von der Sende-Empfangseinheit empfangene Signal der Transpondereinheit im Wesentlichen alleine von der Abschirmeinrichtung beeinflusst wird, kann als eine Transpondereinheit nahezu jede beliebige Transpondereinheit, insbesondere eine kostengünstige Transpondereinheit verwendet werden. Weiter wird eine Kommunikation zwischen der Transpondereinheit und der Sende-Empfangseinheit wesentlich vereinfacht, da der Inhalt der übertragenden Daten grundsätzlich unerheblich ist. Es kommt lediglich darauf an, dass die Transpondereinheit von der Sende-Empfangseinheit überhaupt erfasst bzw. erkannt wird. Auch ist zur Ausbildung der Abschirmeinrichtung nicht zwangsläufig eine Integration eines neuen Bauteils oder einer neuen Baueinheit notwendig. Vielmehr können die im Umgebungsbereich des Reibelements ohnehin vorhandenen Bauteile zur Ausbildung der Abschirmeinrichtung genutzt werden, so dass dafür keine weiteren Kosten entstehen. Auch ist es dann nicht mehr notwendig die Transpondereinheit unmittelbar am Reibelement zu befestigen oder die Transpondereinheit so am Reibelement zu befestigen, dass eine Zerstörung der Transpondereinheit sicher gewährleistet ist. Das Erreichen einer Verschleißgrenze des Reibelements ist von der Sende-Empfangseinheit durch eine Veränderung eines Antwortsignals der Transpondereinheit detektierbar oder alternativ durch ein Ausbleiben des Transpondersignals nach vorherigem Empfang bzw. durch einen Empfang nach einem vorherigem Ausbleiben des Transpondersignals.

Erfindungsgemäß umfasst das Verschleißerkennungssystem eine Haltevorrichtung, die zur bewegbaren Positionierung des Reibelements relativ zu einer Reibfläche und zur Kontaktierung des Reibelements mit der Reibfläche dient. Das Reibelement kann demnach von der Haltevorrichtung gehaltert bzw. aufgenommen sein und beispielsweise mittels einer Federeinrichtung oder eines Aktuators gegen eine Reibfläche mit einer Andruckkraft gedrückt werden. Beispielsweise kann das Reibelement monolithisch mit einer Quaderform oder auch stabförmig ausgebildet sein und so von der Haltevorrichtung aufgenommen sein, dass es im Wesentlichen ortogonal zur Reibfläche in der Haltevorrichtung bewegbar ist. Die infolge von Verschleiß des Reibelements bewirkte Längenminderung und Längsbewegung des Reibelements relativ zur Haltevorrichtung kann dann die Kommunikation zwischen der Transpondereinheit und der Sende-Empfangseinheit mittels der Abschirmeinrichtung beeinflussen.

Erfindungsgemäß ist die Transpondereinheit ortsfest mit der Haltevorrichtung verbunden, wobei die Abschirmeinrichtung als ein an der Haltevorrichtung angeordnetes Abschirmelement ausgebildet ist, welches die Transpondereinheit abschirmend abdeckt oder freigibt, wenn eine Bewegung des Reibelements relativ zu der Haltevorrichtung erfolgt. Demnach kann die Transpondereinheit beispielsweise unmittelbar auf einer Oberfläche der Haltevorrichtung befestigt sein, ohne dass die Transpondereinheit mit dem Reibelement in Kontakt steht. Die Abschirmeinrichtung ist von einem Abschirmelement ausgebildet, welches in Abhängigkeit einer Längenänderung des Reibelements die Transpondereinheit abschirmend abdeckt oder zur Kommunikation mit der Sende-Empfangseinheit freigibt. Das Abschirmelement kann beispielsweise als ein einfaches Metallblech ausgebildet sein, welches nach einer Passage eines Endes des Reibelements relativ zur Transpondereinheit bewegt wird. Eine derartige Abschirmeinrichtung ist ebenfalls kostengünstig auszubilden und ermöglicht eine besonders sichere Übertragung bzw. Kommunikation zwischen der Transpondereinheit und der Sende-Empfangseinheit, weil die Transpondereinheit durch die Trennung von dem Reibelement keinen hohen Temperaturen oder Vibrationen ausgesetzt ist. Insbesondere wenn die Haltevorrichtung aus einem Kunststoffmaterial ausgebildet ist wird dann auch eine Resonanzfrequenz von beispielsweise einer RFID-Transpondereinheit mit Ausnahme des Abschirmelementes kaum von Umgebungsmaterialien beeinflusst.

In einer Ausführungsform kann die Transpondereinheit eine Codierung aufweisen, die von der Sende-Empfangseinheit empfangbar ist. Die Codierung kann als ein Schaltsignal genutzt werden, um zum Beispiel eine Maschine in Betrieb setzen zu können. Wird ein Reibelement in die Maschine eingebaut, das eine vorgegebene Codierung nicht aufweist, kann ein entsprechendes Schaltsignal nicht erzeugt werden, so dass infolge dessen die Maschine nicht in Betrieb genommen werden kann. Somit ist sichergestellt, dass nur für die Maschine zugelassene Reibelemente eingesetzt werden können. Wenn eine Vielzahl von Reibelementen verwendet wird, wird es weiter auch möglich festzustellen, welches der Reibelemente ausgefallenen bzw. verschlissen ist, wenn jedes Reibelement eine individuelle Codierung mittels der Transpondereinheit aufweist. Das Verschleißerkennungssystem kann zu derartigen Steuerzwecken mit einer Steuereinheit bzw. einer Maschinensteuerung verbunden sein.

Vorteilhaft kann die Transpondereinheit eine RFID-Transpondereinheit sein. Zwar ist auch ein Einsatz einer Transpondereinheit denkbar, die beispielsweise auf optischer Übertragungstechnik basiert, jedoch sind RFID-Transpondereinheiten vergleichsweise kostengünstig, und auch in Form eines Klebeetiketts, verfügbar. Vorzugsweise können passive RFID-Traspondereinheiten Verwendung finden, da diese keine externe Stromversorgung benötigen. Weiter ist ein Funksignal zwischen der RFID-Transpondereinheit und der Sende-Empfangseinheit mittels der Abschirmeinrichtung unaufwendig beeinflussbar. So kann eine Resonanzfrequenz einer Antenne der RFID-Transpondereinheit leicht durch ein Abdecken der Antenne oder durch einen elektrischen Leiter in der Nähe der Antenne so beeinflusst werden, dass das Funksignal stark gedämpft oder vollständig abgeschirmt wird.

Das Reibelement kann beispielsweise ein Kontaktstück zur Übertragung elektrischer Energie, wie eine Kohlebürste für einen Elektromotor oder Generator, sein. Das Verschleißerkennungssystem kann insbesondere dann effektiv eingesetzt werden, wenn ein Elektromotor über eine Vielzahl von Kohlebürsten verfügt, die regelmäßig aufgrund von Verschleiß oder Beschädigung ausgewechselt werden müssen. Ein derartiges Verschleißerkennungssystem ist insbesondere dann vorteilhaft einsetzbar, wenn die Kohlebürsten nicht ohne Weiteres gewartet werden können, wie zum Beispiel in einer Windkraftanlage. Rein grundsätzlich kann das Verschleißerkennungssystem jedoch auch für andere Typen von Reibelementen eingesetzt werden, wie beispielsweise alle Arten von Reibbelegen, Bremsbelegen oder für Trockenschmierkörper.

Eine kontrollierte Abschirmung der Transpondereinheit kann dadurch ermöglicht werden, dass die Abschirmeinrichtung der Transpondereinheit unmittelbar benachbart angeordnet ist. Sofern die Transpondereinheit eine Antenne aufweist, kann diese so durch ein mit elektromagnetischer Strahlung wechselwirkendes Material, wie beispielsweise ein Metallwerkstoff, direkt abgeschirmt werden. Das Material oder auch die daraus ausgebildete Abschirmeinrichtung deckt die Transpondereinheit immer vollständig ab, wobei dann eine Permittivität der Abschirmeinrichtung ungleichmäßig relativ zur Transpondereinheit ausgebildet ist, so dass zumindest in einer Position der Transpondereinheit relativ zur Abschirmeinrichtung, oder bei einem vollständigen oder teilweisen Entfernen der Abschirmeinrichtung, eine Kommunikation mit der Sende-Empfangseinheit möglich ist. Insgesamt kann durch die unmittelbare Anordnung der Abschirmeinrichtung in Nähe der Transpondereinheit eine Lageänderung des Reibelements relativ zur Abschirmeinrichtung und/oder zur Transpondereinheit durch eine Kommunikation der Transpondereinheit mit der Sende-Empfangseinheit detektiert werden.

Bei dem erfindungsgemäßen Verfahren zur Verschleißerkennung, insbesondere für Reibelemente wie Bürsten, Reibbelege, Bremsbelege, Schmierstücke oder dergleichen, mit zumindest einem konsumierbaren Reibelement und einer Transpondereinheit, kann die Transpondereinheit mit einer Sende-Empfangseinheit drahtlos kommunizieren, wobei mittels einer Abschirmeinrichtung die Transpondereinheit in Abhängigkeit eines Verschleißzustandes des Reibelements zumindest teilweise abgeschirmt wird, derart, dass eine Kommunikation zwischen der Transpondereinheit und der Sende-Empfangseinheit beeinflusst wird, wobei das Verschleißerkennungssystem eine Haltevorrichtung umfasst, mittels der eine bewegbare Positionierung des Reibelements relativ zu einer Reibfläche erfolgt, wobei die Transpondereinheit ortsfest mit der Haltevorrichtung verbunden ist, wobei die Abschirmeinrichtung als ein an der Haltevorrichtung angeordnetes Abschirmelement ausgebildet ist, mittels dem die Transpondereinheit abschirmend abdeckt oder freigeben wird, wenn eine Bewegung des Reibelements relativ zu der Haltevorrichtung erfolgt. Eine durch Verschleiß bedingte Längenänderung des Reibelements kann so eine Positionsänderung der Transpondereinheit relativ zu der Abschirmeinrichtung bewirken. Die Vorteile des Verfahrens zur Verschleißerkennung betreffend wird auf die nähere Beschreibung des erfindungsgemäßen Verschleißerkennungssystems verwiesen.

Das Verfahren kann besonders einfach ausgeführt werden, wenn die Abschirmeinrichtung eine Permittivität eines räumlichen Übertragungsbereiches der Transpondereinheit verändert. So kann die Abschirmeinrichtung in dem Raum zwischenliegend der Transpondereinheit und der Sende-Empfangseinheit, der zur Übertragung von Sende- oder Empfangssignalen genutzt wird, angeordnet sein und die Sende- bzw. Empfangssignale durch eine Änderung der Permittivität des betreffenden Raumes beeinflussen. Bei elektromagnetischen Übertragungsverfahren kann dies beispielsweise durch Einbringen von elektrisch leitfähigen Materialien in den Raum oder ein entsprechendes Entfernen erfolgen. Wenn dies in Abhängigkeit eines Verschleißzustandes des Reibelements geschieht, kann aus einer Änderung der Permittivität auf einen Verschleißzustand rückgeschlossen werden.

Dies kann auch durch eine verschleißbedingte Maßänderung des Reibelements bewirkt werden, durch die eine Abschirmung oder eine Beseitigung einer Abschirmung der Transpondereinheit erfolgen kann. Ein durch Abrasion bedingter Verschleiß des Reibelements geht mit einer Maßänderung desselben einher, wobei die Maßänderung, wie beispielsweise eine Längenänderung oder ein Abrieb einer Oberfläche, zur Folge haben kann, dass die Transpondereinheit abgeschirmt wird, oder wahlweise eine Abschirmung der Transpondereinheit beseitigt wird. Somit geht ein Verschleiß des Reibelements mit einer Änderung eines Empfangssignals der Transpondereinheit einher, welche von der Sende-Empfangseinheit detektiert werden kann, und aus der Rückschlüsse auf einem Verschleißzustand des Reibelements gezogen werden können.

Somit kann in Abhängigkeit einer Position der Transpondereinheit relativ zu einer von dem Reibelement kontaktierten Reibfläche eine Abschirmung oder eine Beseitigung einer Abschirmung der Transpondereinheit erfolgen.

Weitere vorteilhafte Ausführungsformen des Verfahrens ergeben sich aus den Merkmalsbeschreibungen der auf den Vorrichtungsanspruch 1 rückbezogenen Unteransprüche.

Nachfolgend wird eine bevorzugte Ausführungsform der Erfindung unter Bezugnahme auf die beigefügten Zeichnungen näher erläutert.

Es zeigen:
- **Fig. 1**: eine erste, nicht mit der Erfindung übereinstimmende Ausführungsform eines Verschleißerkennungssystems in einer schematischen Darstellung;
- **Fig. 2**: das Verschleißerkennungssystem nach der ersten Ausführungsform mit einem gegenüber der **Fig. 1** veränderten Verschleißzustand;
- **Fig. 3**: eine zweite Ausführungsform eines Verschleißerkennungssystems in einer schematischen Darstellung;
- **Fig. 4**: das Verschleißerkennungssystem nach der zweiten Ausführungsform mit einem gegenüber der **Fig. 3** veränderten Verschleißzustand.

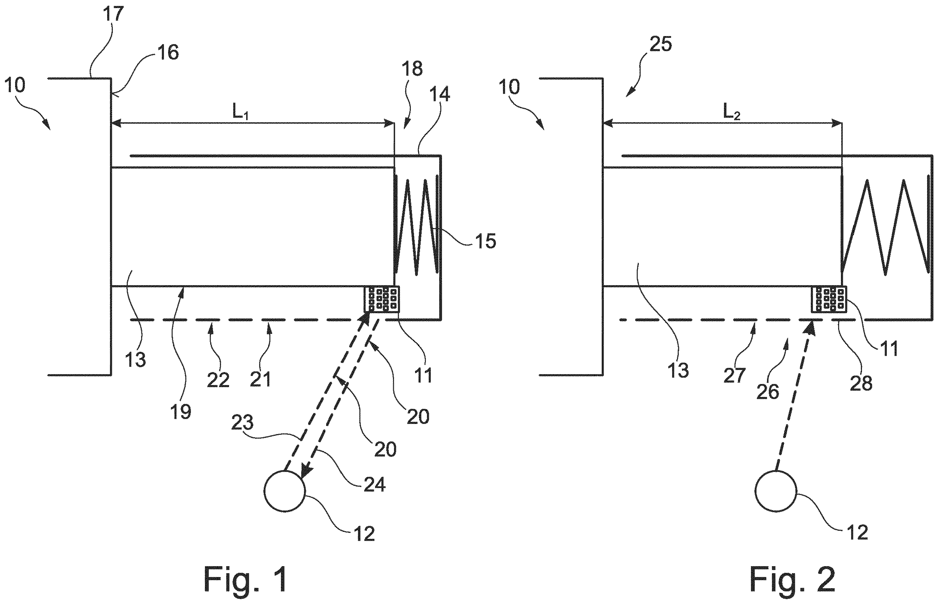

**Fig. 1** zeigt eine schematische Darstellung eines Verschleißerkennungssystems 10 mit einer Transpondereinheit 11, einer Sende-Empfangseinheit 12 und einer Kohlebürste 13. Die Kohlebürste 13 ist in einen Halter 14 zur längsbeweglichen Aufnahme der Kohlebürste 13 eingesetzt, und wird mittels einer Feder 15 gegen eine Reibfläche 16 eines hier abschnittsweise dargestellten Schleifrings 17 angedrückt. An einem hinteren Ende 18 der Kohlebürste 13 ist an einer Seitenfläche 19 der Kohlebürste 13 die Transpondereinheit 11 aufgeklebt. In dem Halter 14, welcher aus einem metallenen Werkstoff gebildet ist, sind Öffnungen 20, 21 und 22 ausgebildet, mit denen die Transpondereinheit 11 in Abhängigkeit einer Länge L der Kohlebürste 13 in Überdeckung gebracht werden kann.

Wie aus **Fig. 1** ersichtlich ist, gelangt die Transpondereinheit 11 bei einer Länge L1 der Kohlebürste 13 so in einen Bereich der Öffnung 20, dass die Sende-Empfangseinheit 12 ein Signal 23 an die Transpondereinheit 11 senden kann, das von dieser empfangen wird. Die Transpondereinheit 11 sendet wiederum ein Signal 24 zurück an die Sende-Empfangseinheit 12, wodurch nunmehr der Sende-Empfangseinheit 12 die Information vorliegt, dass die Transpondereinheit 11 im Bereich der Öffnung 20 angelangt ist und die Kohlebürste 13 folglich eine Länge L1 aufweisen muss.

Bei einem Verschleiß eines vorderen Endes 25 der Kohlebürste 13 vermindert sich die Länge L1 auf die hier in **Fig. 2** beispielhaft dargestellte Länge L2. Bei der Länge L2 gelangt die Transpondereinheit 11 in Überdeckung mit einer Abschirmeinrichtung 26 die vom Halter 14 ausgebildet wird. Im vorliegenden Fall ist die Abschirmeinrichtung 26 durch eine Wandung 27 des Halters 14 aus Metallblech gebildet. Wenn, wie in **Fig. 2** dargestellt, die Transpondereinheit 11 unmittelbar von einem Wandungsabschnitt 28 abgedeckt wird, wird die Transpondereinheit 11 gegenüber der Sende-Empfangseinheit 12 bzw. dem von der Sende-Empfangseinheit ausgesendeten Signal 23 abgeschirmt, und ist für die Sende-Empfangseinheit 12 nicht erreichbar. Diese Information kann nun in einer übergeordneten Maschinensteuerung oder auch von der Sende-Empfangseinheit 12 verarbeitet werden, wobei aus der unterbundenen Kommunikation zwischen der Sende-Empfangseinheit 12 und der Transpondereinheit 11 ein Rückschluss auf die Länge L2 der Kohlebürste 13 gezogen werden kann.

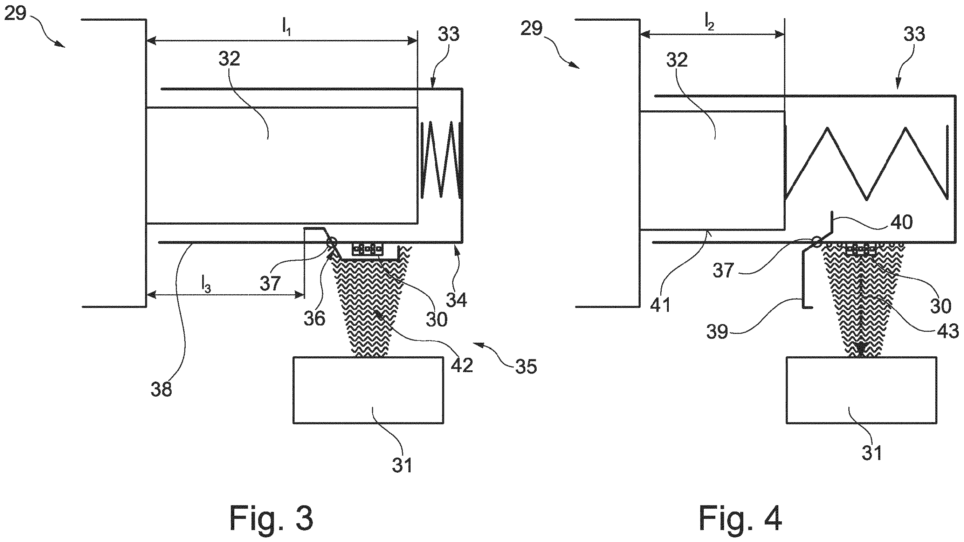

Die **Fig. 3** und **4** zeigen ein Verschleißerkennungssystem 29 mit einer Transpondereinheit 30 und einer Sende-Empfangseinheit 31 sowie einer Kohlebürste 32. Im Unterschied zu dem Verschleißerkennungssystem aus den **Fig. 1** und **2** ist hier die Kohlebürste 32 in einem Halter 33 eingesetzt, an dessen Außenfläche 34 die Transpondereinheit 30 fest fixiert ist. Eine Abschirmeinrichtung 35 ist aus einem Abdeckelement 36 aus Metall gebildet, welches um eine Achse 37 schwenkbar an einer Wandung 38 des Halters 33 gehaltert ist. Das Abdeckelement 36 ist in Art einer Wippe ausgebildet mit einem äußeren Ende 39 zur Abschirmung der Transpondereinheit 30 und einem inneren Ende 40 zur Anlage an einer Seitenfläche 41 der Kohlebürste 32.

Wie aus **Fig. 3** ersichtlich, liegt bei einer Länge 11 der Kohlebürste 32 das innere Ende 40 des Abdeckelements 36 an der Seitenfläche 41 der Kohlebürste 32 so an, dass das äußere Ende 39 des Abdeckelements 36 die Transpondereinheit 30 gegenüber elektromagnetischer Strahlung bzw. einem Signal 42 der Sende-Empfangseinheit 31 abschirmt. Bei Unterschreiten einer Länge l3 der Kohlebürste 32 kann das innere Ende 40 nicht mehr an der Seitenfläche 41 anliegen, so dass das Abdeckelement 36 unvermittelt, aufgrund hier nicht näher dargestellter Krafteinwirkung durch zum Beispiel eine Feder oder Gewichtskraft, freigegeben wird, so dass es um die Achse 37 geschwenkt wird und das äußere Ende 39 die Transpondereinheit 30 nicht mehr abschirmt. Das Signal 42 kann nun von der Transpondereinheit 30 empfangen werden, wobei die Transpondereinheit 30 ein Signal 43 an die Sende-Empfangseinheit 31 zurücksendet. Die Sende-Empfangseinheit 31 kann nun ein Überschreiten einer Länge l3 der Kohlebürste 32 registrieren und gegebenenfalls an eine übergeordnete Maschinensteuerung weiterleiten.

## Patentansprüche

1. Verschleißerkennungssystem (29), insbesondere für Reibelemente, wie Bürsten, Reibbeläge, Bremsbeläge, Schmierstücke oder dergleichen, umfassend zumindest ein konsumierbares Reibelement und eine Transpondereinheit (30), wobei die Transpondereinheit mit einer Sende-Empfangseinheit (31) drahtlos kommunizieren kann, wobei das Verschleißerkennungssystem eine Abschirmeinrichtung (35) aufweist, wobei die Abschirmeinrichtung so ausgebildet ist, dass mittels der Abschirmeinrichtung die Transpondereinheit in Abhängigkeit eines Verschleißzustandes des Reibelements zumindest teilweise abschirmbar ist, derart, dass eine Kommunikation zwischen der Transpondereinheit und der Sende-Empfangseinheit beeinflussbar ist, **dadurch gekennzeichnet, dass** das Verschleißerkennungssystem eine Haltevorrichtung (33) umfasst, die zur bewegbaren Positionierung des Reibelements relativ zu einer Reibfläche dient, wobei die Transpondereinheit ortsfest mit der Haltevorrichtung verbunden ist, wobei die Abschirmeinrichtung als ein an der Haltevorrichtung angeordnetes Abschirmelement (36) ausgebildet ist, welches die Transpondereinheit abschirmend abdecken oder freigeben kann, wenn eine Bewegung des Reibelements relativ zu der Haltevorrichtung erfolgt.

2. Verschleißerkennungssystem nach Anspruch 1,
**dadurch gekennzeichnet,**
**dass** die Transpondereinheit (30) eine Codierung aufweist, die von der Sende-Empfangseinheit (31) empfangbar ist.

3. Verschleißerkennungssystem nach Anspruch 1 oder 2,
**dadurch gekennzeichnet,**
**dass** die Transpondereinheit (30) eine RFID-Transpondereinheit ist.

4. Verschleißerkennungssystem nach einem der vorangehenden Ansprüche,
**dadurch gekennzeichnet,**
**dass** das Reibelement ein Kontaktstück (32) zur Übertragung elektrischer Energie ist.

5. Verschleißerkennungssystem nach einem der vorangehenden Ansprüche,
**dadurch gekennzeichnet,**
**dass** die Abschirmeinrichtung (35) der Transpondereinheit (30) unmittelbar benachbart angeordnet ist.

6. Verfahren zur Verschleißerkennung, insbesondere für Reibelemente, wie Bürsten, Reibbeläge, Bremsbeläge, Schmierstücke oder dergleichen, mit zumindest einem kosumierbaren Reibelement, und einer Transpondereinheit (30), wobei die Transpondereinheit mit einer Sende-/Empfangseinheit (31) drahtlos kommunizieren kann, **dadurch gekennzeichnet,**
**dass** mittels einer Abschirmeinrichtung (35) die Transpondereinheit in Abhängigkeit eines Verschleißzustandes des Reibelements zumindest teilweise abgeschirmt wird, derart, dass eine Kommunikation zwischen der Transpondereinheit und der Sende-Empfangseinheit beeinflusst wird, wobei das Verschleißerkennungssystem eine Haltevorrichtung (33) umfasst, mittels der eine bewegbare Positionierung des Reibelements relativ zu einer Reibfläche (16) erfolgt, wobei die Transpondereinheit ortsfest mit der Haltevorrichtung verbunden ist, wobei die Abschirmeinrichtung als ein an der Haltevorrichtung angeordnetes Abschirmelement (36) ausgebildet ist, mittels dem die Transpondereinheit abschirmend abdeckt oder freigeben wird, wenn eine Bewegung des Reibelements relativ zu der Haltevorrichtung erfolgt.

7. Verfahren nach Anspruch 6,
**dadurch gekennzeichnet,**
**dass** die Abschirmeinrichtung (35) eine Permittivität eines räumlichen Übertragungsbereiches der Transpondereinheit (30) verändert.

8. Verfahren nach Anspruch 6 oder 7,
**dadurch gekennzeichnet,**
**dass** durch eine verschleißbedingte Maßänderung des Reibelements eine Abschirmung oder eine Beseitigung einer Abschirmung der Transpondereinheit (30) erfolgt.

9. Verfahren nach einem der Ansprüche 6 bis 8,
**dadurch gekennzeichnet,**
**dass** in Abhängigkeit einer Position der Transpondereinheit (30) relativ zu einer von dem Reibelement kontaktierten Reibfläche eine Abschirmung oder eine Beseitigung einer Abschirmung der Transpondereinheit erfolgt.

## Claims

1. A wear detection system (29), in particular for friction elements, such as brushes, friction linings, brake linings, lubrication pieces or the like, comprising at least one consumable friction element and a transponder unit (30), wherein the transponder unit can communicate wirelessly with a transmitter-receiver unit (31), wherein the wear detection system comprises a shielding device (35), said shielding device being configured in such a manner that by means of the shielding device, the transponder unit can be at least partially shielded as a function of a wear condition of the friction element, such that communication between the transponder unit and the transmitter-receiver unit can be influenced, **characterized in that**
the wear detection system comprises a support structure (33) which serves to movably position the friction element relative to a friction surface, the transponder unit being immovably connected to the support structure, the shielding device being formed as a shielding element (36), which is arranged at the support structure and which can cover the transponder unit in a shielding manner or uncover it when a motion of the friction element relative to the support structure occurs.

2. The wear detection system according to claim 1,
**characterized in that**
the transponder unit (30) has a coding that can be received by the transmitter-receiver unit (31).

3. The wear detection system according to claim 1 or 2, **characterized in that**
the transponder unit (30) is an RFID transponder unit.

4. The wear detection system according to any of the preceding claims,
**characterized in that**
the friction element is a contact piece (32) for transmitting electric energy.

5. The wear detection system according to any of the preceding claims,
**characterized in that**
the shielding device (35) is arranged directly adjacent to the transponder unit (30).

6. A method for detecting wear, in particular for friction elements, such as brushes, friction linings, brake linings, lubrication pieces or the like, comprising at least one consumable friction element, and comprising a transponder unit (30), wherein the transponder unit can communicate wirelessly with a transmitter-receiver unit (31),
**characterized in that**
by means of a shielding device (35), the transponder unit is at least partially shielded as a function of a wear condition of the friction element, such that communication between the transponder unit and the transmitter-receiver unit is influenced, the wear detection system comprising a support structure (33) which serves to movably position the friction element relative to a friction surface (16), the transponder unit being immovably connected to the support structure, the shielding device being formed as a shielding element (36), which is arranged at the support structure and by means of which the transponder unit is covered in a shielding manner or uncovered when a motion of the friction element relative to the support structure occurs.

7. The method according to claim 6,
**characterized in that**
the shielding device (35) changes a permittivity of a spatial transmission range of the transponder unit (30).

8. The method according to claim 6 or 7,
**characterized in that**
by means of a wear-related dimensional change of the friction element, a shielding or an elimination of a shielding of the transponder unit (30) takes place.

9. The method according to any of the claims 6 to 8, **characterized in that**
as a function of a position of the transponder unit (30) relative to a friction surface contacted by the friction element, a shielding or an elimination of a shielding of the transponder unit takes place.

## Revendications

1. Système (29) pour la détection de l'usure, notamment pour des éléments de frottement, tels que des brosses, des garnitures de friction, des garnitures de frein, des pièces de lubrification ou similaires, comprenant au moins un élément de frottement consommable et une unité de transpondeur (30), dans lequel l'unité de transpondeur peut communiquer sans fil avec une unité d'émission-réception (31), dans lequel le système pour la détection de l'usure comprend un dispositif de blindage (35), ledit dispositif de blindage étant configuré de telle manière qu'au moyen du dispositif de blindage, l'unité de transpondeur peut être au moins partiellement blindée en fonction d'un état d'usure de l'élément de frottement, de telle manière que la communication entre l'unité de transpondeur and the unité émission-réception peut être influencée,
**caractérisé en ce que**
le système pour la détection de l'usure comprend une structure de support (33) qui sert à positionner de manière mobile l'élément de frottement par rapport à une surface de frottement, l'unité de transpondeur étant reliée de manière inamovible à la structure de support, le dispositif de blindage étant formé d'un élément de blindage (36), qui est disposé sur la structure de support et qui peut couvrir l'unité de transpondeur d'une manière blindée ou la découvrir lorsqu'un mouvement de l'élément de frottement par rapport à la structure de support se produit.

2. Système pour la détection de l'usure selon la revendication 1, **caractérisé en ce que**
l'unité de transpondeur (30) a un codage qui peut être reçu par l'unité émission-réception (31).

3. Système pour la détection de l'usure selon la revendication 1 ou la revendication 2,
**caractérisé en ce que**
l'unité de transpondeur (30) est une unité de transpondeur RFID.

4. Système pour la détection de l'usure selon l'une quelconque des revendications précédentes,
**caractérisé en ce que**
l'élément de frottement est une pièce de contact (32) pour transmettre l'énergie électrique.

5. Système pour la détection de l'usure selon l'une quelconque des revendications précédentes,
**caractérisé en ce que**
le dispositif de blindage (35) est disposé directement à côté de l'unité de transpondeur (30).

6. Procédé de détection de l'usure, notamment pour des éléments de frottement, tels que des brosses, des garnitures de friction, des garnitures de frein, des pièces de lubrification ou similaires, comprenant au moins un élément de frottement consommable, et comprenant une unité de transpondeur (30), dans lequel l'unité de transpondeur peut communiquer sans fil avec une unité émission-réception (31),
**caractérisé en ce**
**qu'**au moyen d'un dispositif de blindage (35), l'unité de transpondeur est au moins partiellement blindée en fonction d'un état de l'usure de l'élément de frottement de sorte que la communication entre l'unité de transpondeur et l'unité émission-réception est influencée, le système (29) pour la détection de l'usure comprenant une structure de support (33) qui sert à positionner de manière mobile l'élément de frottement par rapport à une surface de frottement (16), l'unité de transpondeur étant reliée de manière inamovible à la structure de support, le dispositif de blindage étant formé d'un élément de blindage (36), qui est disposé sur la structure de support et au moyen duquel l'unité de transpondeur est couverte de manière blindé ou est découverte lorsqu'un mouvement de l'élément de frottement par rapport à la structure de support se produit.

7. Procédé selon la revendication 6,
**caractérisé en ce que**
le dispositif de blindage (35) modifie une permittivité d'une plage de transmission spatiale de l'unité de transpondeur (30).

8. Procédé selon la revendication 6 ou la revendication 7, **caractérisé en ce que**
par la modification dimensionnel lié à l'usure de l'élément de frottement, un blindage ou une élimination d'un blindage de l'unité de transpondeur (30) se produit.

9. Procédé selon l'une quelconque des revendications 6 à 8, **caractérisé en ce**
**qu'**en fonction d'une position de l'unité de transpondeur (30) par rapport à une surface de frottement contactée par l'élément de frottement, un blindage ou une élimination d'un blindage de l'unité de transpondeur se produit.
